# EUROPEAN PATENT SPECIFICATION

(11) **EP 3 872 465 B1**
(45) Date of publication and mention of the grant of the patent: **27.08.2025**
(21) Application number: 20159328.2
(22) Date of filing: 25.02.2020
(51) Int. Cl.: G01K 7/12, G01K 7/13

(54) **TEMPERATURE SENSOR AND A METHOD OF MANUFACTURING A TEMPERATURE SENSOR**
TEMPERATURSENSOR UND VERFAHREN ZUR HERSTELLUNG EINES TEMPERATURSENSORS
CAPTEUR DE TEMPÉRATURE ET PROCÉDÉ DE FABRICATION D'UN CAPTEUR DE TEMPÉRATURE

(43) Date of publication of application: 01.09.2021
(73) Proprietor: Hidria d.o.o., 5220 Tolmin (SI)
(72) Inventor: MILOST, Uros, 5000 Nova Gorica (SI); IVANCIC, Matej, 5230 Bovec (SI); URSIC, Peter, 5222 Kobarid (SI)
(74) Representative: Herrmann, Jochen

(56) References cited:
- WO-A1-2017/068307
- DE-A1- 102017 115 976
- US-A- 2 999 121
- US-A1- 2011 268 152

## Description

The invention is related to a temperature sensor and a method of manufacturing such a temperature sensor according to the preamble of the independent claims.

The use of a thermocouple for temperature measurement in a car is well known. Temperature sensors with one or more thermocouples are characterized by the ability to detect a wide temperature range of -50°C to 1000°C.The so-called thermoelectric effect is used here: If two electrically conductive measuring wires made of different metallic materials are connected to one another and if this connection point and the free ends of the measuring wires are exposed to different temperatures, a thermal voltage is generated between the free ends, the strength of which is directly proportional to the temperature difference between the measuring point and a reference temperature at a reference point or junction at the free ends of the measuring wires. **If** the temperature at the reference junction and the characteristic thermally induced electrical voltage of the different measuring wires are known, the temperature at the junction can be determined.

Compared to other temperature sensors, thermocouples offer the advantage that they can be made comparatively small and compact and the thermoelectric voltage can be transmitted over a greater distance. They are therefore able to measure the temperature even in places that are difficult to access, for example in the exhaust system of a motor vehicle or in a cooling water or oil circuit of the vehicle.

A temperature sensor for a motor vehicle engine with a thermocouple, a printed circuit board and an integrated circuit is known from WO 2017/068 307 A1. The temperature sensor comprises a protective housing made of a polymer material, in which the circuit board is arranged. The free ends of the thermocouple are connected to terminals on the circuit board by means of connecting means which are made of the same material as the respective measuring wire of the thermocouple.

A temperature sensor for a motor vehicle is known from WO 2018 / 002 547 A1. The temperature sensor has a thermocouple, which is connected to metallic transmission elements in a first housing. The temperature sensor also has a second housing in which a printed circuit board with an evaluation circuit is arranged, the second housing encasing the first housing. The metallic transmission elements connect the free ends of the thermocouple with the printed circuit board. Each connection point is surrounded by a sealing element. The first housing supports the junction between the free ends of the thermocouple and the metallic transmission bodies.

US 7,722,362 B2 discloses a temperature sensor with a thermocouple and an evaluation circuit as well as a manufacturing method for such a temperature sensor. The temperature sensor comprises a printed circuit board, a housing, a thermocouple and a connecting element. The circuit board includes an electrical circuit configured to receive a sensor signal and to generate a sensor characteristic in response to the received sensor signal. The housing includes a body and a cavity defined by inner surfaces of the body and configured to receive the circuit board, the circuit board being positioned in the cavity. The input line is configured to receive the signal from a sensor and can be formed with an insulated solid or stranded conductor. The connecting element comprises a unitary body with a first end, which is attached directly to one end of the measuring wire of the thermocouple, and with a second end, which is positioned in the cavity and is attached directly to the printed circuit board.

The disadvantage of the known solutions, however, is that they are complex to manufacture and therefore comparatively expensive. Furthermore, the distance between the free ends of the thermocouple, at which the thermoelectric voltage of the thermocouple is detected, and a reference temperature sensor on the circuit board causes a measurement error, because the temperature at the free ends of the thermocouple differs from the temperature on the circuit board. The measuring accuracy of the temperature sensor is reduced by partition walls and other boundaries.

The invention is based on the object of improving the measurement accuracy of a temperature sensor and of overcoming the disadvantages known from the prior art.

This object is solved by a temperature sensor with the features of claim 1 or of claim 2. According to the invention, it is provided that the housing has a cavity in which the integrated circuit, in particular the application specific integrated circuit (ASIC), and connections with which the stranded wires are electrically conductively connected to the transmission elements are arranged. By arranging the printed circuit board (PCB), the transmission elements as well as the stranded wires of the thermocouples in a common cavity of the housing, the measuring point for the thermoelectric voltage can be located close to the measuring point for a reference temperature on the printed circuit board. In addition, this arrangement avoids partition walls which could have an insulating effect and thus lead to a deviation between the temperature at the strands of the thermocouple and the reference temperature on the circuit board. Thus, the deviation between the temperature at the stranded wire of the thermocouple and the resulting thermoelectric voltage to the measured reference temperature on the circuit board can be reduced. By more precisely determining the reference temperature at the "cold ends" of the thermocouple, the measuring accuracy at the connection point of the measuring wires of the thermocouple, i.e. the "hot end" of the thermocouple, can be improved. The housing preferably completely surrounds the printed circuit board in order to protect the printed circuit board from mechanical damage, dirt or splash water.

The features listed in the dependent claims allow advantageous further developments and improvements of the temperature sensor specified in the independent patent claims.

In a preferred embodiment of the temperature sensor, it is provided that the transmission elements are designed as SMD connectors, wherein the SMD connectors are arranged on the printed circuit board, the SMD connectors connecting the stranded wires of the measuring wires to the printed circuit board in an electrically conductive manner. SMD connectors enable a simple and stable connection between the stranded wires of the thermocouples and the printed circuit board. In addition, the temperature difference between the measuring point for evaluating the thermal voltage of the thermocouple and the reference temperature can be minimized by a connection using SMD connectors. By connecting the SMD connectors to the circuit board via one or more copper layers, the heat transfer can also be improved by conduction, which further reduces the temperature difference. In addition, the excellent heat conduction can reduce the time until a stable measuring temperature is reached.

In a preferred configuration of the temperature sensor, it is provided that two metallic terminals are arranged in the housing, a section of the first measuring wire being connected to the first terminal and a section of the second measuring wire being connected to the second terminal in a material or form-fitting manner in order to form a strain relief. A requirement for such a temperature sensor is that a force acting on the measuring wires of the thermocouple should not be transmitted to the sensitive printed circuit board or the ASIC. The metallic terminals provide strain relief so that a force acting on the measuring wires of the thermocouples can be diverted into the housing. The strain relief leads to a reduction of the mechanical forces acting on the printed circuit board. This reduces the risk of damage to the printed circuit board.

It is particularly preferred if the terminals or the sections connected to the terminals are spaced apart from the printed circuit board. A distance between the terminals and the printed circuit board can prevent the danger of an electrical short circuit. In this way the function of the strain relief and the electrical signal transmission from the measuring wires of the thermocouple to the printed circuit board can be strictly separated.

Alternatively or in addition, it is advantageous to have a layer of insulating material between the terminals or the sections of the measuring wires connected to the terminals and the printed circuit board. This prevents an electric connection between the terminals and the integrated circuit arranged on the printed circuit board. An insulation layer can prevent an electrical short circuit between the stranded wire of the thermocouple and the printed circuit board. In this way, electrical contact between the terminals and the printed circuit board can be reliably prevented, particularly in the event of vibrations, shocks or mechanical impacts.

In a further preferred design of the temperature sensor, the transmission elements are arranged in the housing, with a free end section of each terminal being electrically connected to the circuit board.

In an advantageous design of the temperature sensor it is provided that the stranded wire of the first measuring wire is connected to the first terminal and the stranded wire of the second measuring wire is connected to the second terminal in a material-locking or form-locking manner to form a strain relief.

It is particularly preferred if the terminals are accommodated in the printed circuit board by means of a press-fit connection. This enables a simple and stable connection between the free end sections of the terminals and the PCB, which can be made without additional tools. Further welding or soldering connections can be dispensed with, thus minimising production costs.

In an advantageous design of the temperature sensor, the stranded wire or sections of the measuring wires are welded or crimped to the terminals. By welding the stranded wires of the thermocouple to the respective terminal, a permanent and reliable connection can be established. A welded connection can be produced in particular by an ultrasonic welding process or a resistance welding process. Alternatively, it is advantageous to connect the stranded wires of the thermocouple with the terminals by means of a crimp connection, whereby the connection is made by means of a corresponding plastic deformation on the stranded wire and/or the terminals. A crimp connection can also be used to transmit correspondingly high forces, so that a crimp connection offers sufficient resistance when the measuring wires of the thermocouple are subjected to a tensile load, thus avoiding damage to the connection point.

In accordance with a beneficial further development of the temperature sensor, it is planned that the terminals will be U-shaped or meander-shaped in a cross-sectional plane extending essentially perpendicular in respect to the extension of the printed circuit board. This allows an elasticity to be realized in the direction of tension of the measuring wires, which allows an elastic deformation of the domes, so that a tensile force does not lead to permanent damage to the connection. Furthermore, the U-shape or meander shape allows the dome to be easily accommodated in the housing with a positive fit.

In a preferred embodiment of the temperature sensor, it is provided that the terminals are accommodated positively in the housing at least in sections. The position of the terminals relative to the housing can be defined and fixed by means of a form-fit connection. In addition, comparatively high forces can be transmitted through the positive connection, so that the terminals provide efficient strain relief for the connection points on the PCB. Forces acting on the measuring wires of the thermocouple are transmitted into the housing via the domes, so that the PCB is relieved.

In another preferred embodiment of the temperature sensor it is provided that the printed circuit board is connected by means of further transmission elements with an electrical output contact for contacting the temperature sensor. In order to enable simple electrical contacting of the temperature sensor, the printed circuit board can be connected to the output contact via further transmission elements. The design of the housing makes it easy to seal the cavity against dirt and spray water.

It is particularly preferred if the other transmission elements are connected to the housing by means of an injection moulding process with a material fit and/or form fit connection. By means of a material-locking connection, a sealing between the output contact and the printed circuit board can be achieved in a simple manner, whereby the printed circuit board is protected against splash water and/or contamination. The position of the transmission element can be fixed exactly by means of a positive-locking connection, so that the mounting of the temperature sensor, in particular the electrical connection between the printed circuit board and the electrical output contact can be established in a simple manner.

In an advantageous design of the temperature sensor, a reference temperature sensor is provided on the printed circuit board. By means of a reference temperature sensor on the printed circuit board, in particular as part of the integrated circuit, the measured thermoelectric voltage can be assigned a reference temperature prevailing at the cold ends of the thermocouple. Since there is only a small distance between the cold ends of the thermocouple and the reference temperature sensor, the temperature at the cold ends of the thermocouples essentially corresponds to the temperature at the reference temperature sensor.

Alternatively, the reference temperature sensor can also be arranged at another location in the cavity of the housing. Proximity of the reference sensor to the cold ends of the thermocouple is desired.

Another aspect of the invention concerns a method for manufacturing such a temperature sensor, whereby the printed circuit board, the transmission elements as well as the strands of the measuring wires are arranged in a common cavity of the housing. The method enables the production of a mechanically robust sensor, which has a high measuring accuracy and can be manufactured with low production costs. By arranging the printed circuit board, the transmission elements as well as the stranded wire of the thermocouples in a common cavity of the housing, the measuring point for the thermoelectric voltage can be placed close to the measuring point for a reference temperature on the printed circuit board. In addition, this arrangement avoids partition walls which could have an insulating effect and thus lead to a deviation between the temperature at the stranded wire of the thermocouple and the reference temperature on the circuit board. Thus, the deviation between the temperature at the stranded wire of the thermocouples and the resulting thermoelectric voltage to the measured reference temperature on the printed circuit board can be reduced.

As a further benefit, the proposed temperature sensor allows the design of a very small and compact temperature sensor despite the spatial separation of strain relief and electrical transmission point to the printed circuit board. The material of the terminals can be selected in such a way that a stable fixing of the stranded wire to the terminals by means of a welding or crimping process is possible. The SMD connectors or pressfit connection allows an efficient transmission of an electrical signal to the PCB and from there to the integrated circuit.

The various embodiments of the invention mentioned in this application can be combined with each other to advantage, unless otherwise stated in the individual case.

The invention is described in the following in design examples based on the associated drawings. Identical components or components with the same function are provided with the same reference numbers in the different drawings.
Fig. 1 shows a first example of a temperature sensor with a thermocouple, whereby the stranded wires of the thermocouple are connected with SMD connectors to a printed circuit board of the temperature sensor,
Fig. 2 shows a further representation of a temperature sensor, whereby the measuring wires of the thermocouples are connected to terminals, which are positively held in a housing of the temperature sensor and have no electrical connection to the printed circuit board;
Fig. 3 shows a further example for a temperature sensor with a thermocouple and a printed circuit board on which an ASIC is arranged, the electrical connection from the stranded wire of the thermocouple to the printed circuit board being made by a terminal, the terminal having a connection point at which the stranded wire is connected to the terminal and an electrical transmission point spatially separated from the connection point at which the terminal is electrically conductively connected to the printed circuit board;
Fig. 4 shows further views of the first example of a temperature sensor in different sectional views; and
Fig. 5 shows further views of the second example of a temperature sensor in different sectional views; and

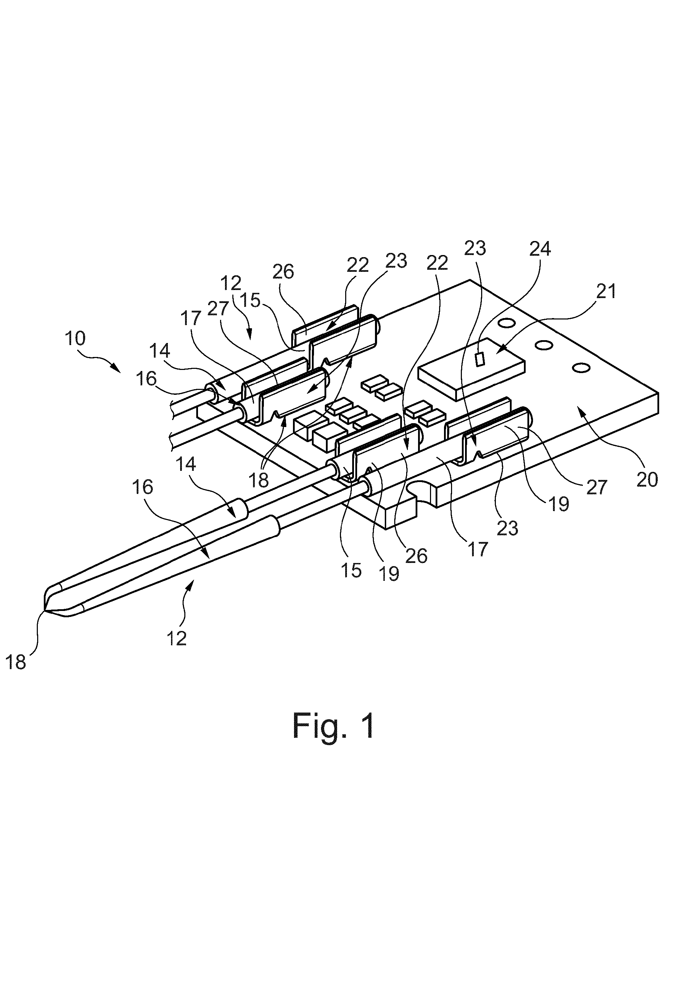

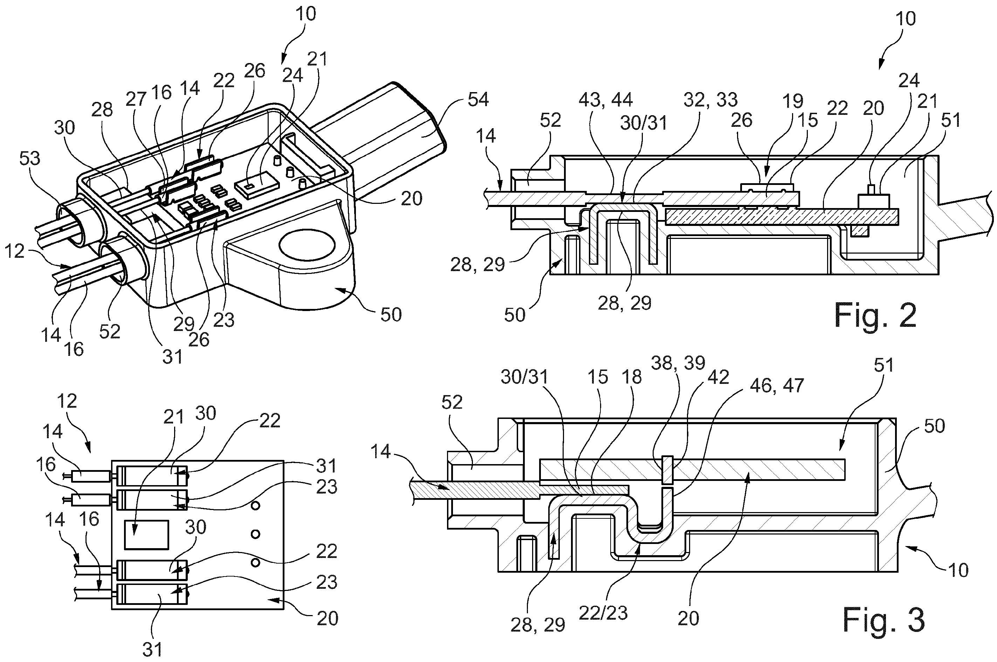

Figures 1 and 2 show a first design example of a temperature sensor 10 with a housing 50 and a printed circuit board 20 arranged at least partially in the housing 50. The temperature sensor 10 further comprises a thermocouple 12, with an integrated circuit 21, in particular an ASIC 21, arranged on the printed circuit board 20. The thermocouple 12 comprises a first measuring wire 14 and a second measuring wire 16, the first measuring wire 14 and the second measuring wire 16 being electrically conductively connected to each other with their respective first ends at a connection point or junction 18. The measuring wires 14, 16 have an electrically conductive stranded wire or strand 15, 17 at their second end. Transmission elements 22, 23 for transmitting a measuring voltage Uₘ or a measuring current Iₘ to the printed circuit board 20 are arranged in the housing 50. The transmission elements 22, 23 are made of a different material than the stranded wires 15, 17. The stranded wires 15, 17 are connected to the respective transmission element 22, 23 at a connection point or junction 19. The housing 50 has a cavity 51, in which the ASIC 21 and the connection point 19 with which the stranded wire 15, 17 are electrically conductively connected to the transmission elements 22, 23 are arranged.

The transmission elements 22, 23 could be designed as SMD connectors 26, 27, which are soldered to the printed circuit board 20. A reference temperature sensor 24 is arranged in the cavity 51 preferably on the printed circuit board 20, most preferably on the ASIC 21, with which a reference temperature T_{ref} can be recorded. By means of the reference temperature T_{ref} and the thermoelectric voltage between the two stranded wires 15, 17 of the measuring wires 14, 16, a measuring temperature Tₘ can be determined at the connection point 18.

Figure 2 shows the first example of the temperature sensor 10 in a further illustration. It can be seen that the housing 50 has a cavity 51. The housing 50 also has a first connection orifice 52 for connecting a first thermocouple 12. The housing 50 also has a second connection orifice 53 for connecting a second thermocouple 12. The housing 50 also has a further orifice 54, which enables an electrical connection of the printed circuit board 20 with an electrical output contact 34. The top side of the housing 50 could be closed by means of a cover, such that the cavity 51 is sealed.

As shown in Fig. 1, the strand 15 of a first measuring wire 14 of the thermocouple 12 is connected to the printed circuit board 20 by means of an SMD connector 26. A second strand 17 of a second measuring wire 16 is connected to the PCB 20 with a second SMD connector 27.

As shown in Fig. 2 the housing 50 comprises two metallic terminals 28, 29, which are positively connected with the housing 50. The first measuring wire 14 of the thermocouple 12 is connected to a first terminal 28 at a further connection point 30 via a weld seam 32. The weld seam 32 can be produced in particular by means of an ultrasonic welding process or a resistance welding process. The second measuring wire 16 of thermocouple 12 is connected at a connection point 31 to the second terminal 29 by means of a weld seam 32. As an alternative to a weld seam 32, the measuring wires 14, 16 can also be connected to the respective terminals 28, 29 by means of a crimp connection 33. By connecting the strands 15, 17 of the measuring wires 14, 16 to the terminals 28, 29, an effective strain relief is created so that the PCB is not damaged when a tensile force is applied to the measuring wires 14, 16 of the thermocouple 12 and this tensile force is introduced into the housing 50 via the terminals 28, 29. The terminals 28, 29 could also be referred to as domes.

To form a weld seam 32 or a crimp connection 33 between the measuring wires 14, 16 of thermocouple 12 and the terminals 28, 29, the measuring wires 14, 16 are each at least partially stripped of insulation. For this purpose, a section 43, 44 of the respective measuring wire 14, 16 adjacent to the terminal 28, 29 is stripped of its insulation. The transmission of the electrical signal from the respective measuring wire 14, 16 to the printed circuit board 20 is realized as shown in Fig. 1 and Fig. 2 via an SMD connector 26, 27.

Fig. 3 shows another example of a temperature sensor 10, which comprises a housing 50 with a cavity 51 in which a printed circuit board 20 is located. The temperature sensor 10 further comprises a thermocouple 12, with an ASIC 21 arranged on the printed circuit board 20. The thermocouple 12 comprises a first measuring wire 14 and a second measuring wire 16, the first measuring wire 14 and the second measuring wire 16 being electrically conductively connected to each other with their respective first ends at a junction 18. The measuring wires 14, 16 have electrically conductive stranded wires 15, 17 at their respective second ends.

The housing 50 contains transmission elements 22, 23 for transmitting a measuring voltage Uₘ or a measuring current Iₘ to the printed circuit board 20. The transmission elements 22, 23 are designed as terminals 28, 29, which are positively mounted in the housing 50. A free end section 46, 47 of each terminal 28, 29 is connected to an electrically conductive contact on the printed circuit board 20 e.g. by means of a press-fit connection 42.

On the printed circuit board 20, preferably integrated in the ASIC 21, a reference temperature sensor 24 is arranged to determine a reference temperature T_{ref.} In knowledge of the reference temperature T_{ref} and the thermoelectric voltage between the two strands 15, 17 of the measuring wires 14, 16, a measuring temperature Tₘ can be determined at the connection point 18. Both the electrical signal transmission and the strain relief are carried out at a connection point 30, 31 between the respective strands 15, 17 of the measuring wires 14, 16 and the dome 28, 29. The dome 28, 29 is electrically connected with its end section 46, 47 at a transmission point 38, 39 to the printed circuit board 20.

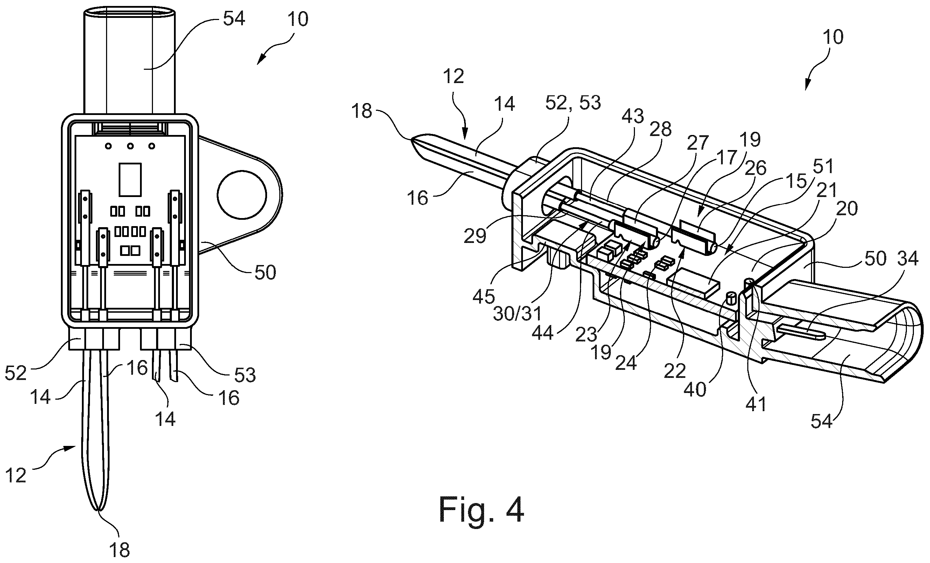

Fig. 4 shows further views of the first design example for a temperature sensor 10. It can be seen that the connection orifices 52, 53 for the thermocouples 12 and the further orifice 54 for the electrical output contact 34 are formed on opposite end faces of the housing 50. It can also be seen that the measuring wires 14, 16 of thermocouple 12 are connected to the SMD connectors 26, 27 at one connection point 19 and to the terminals 28, 29 at another connection point.

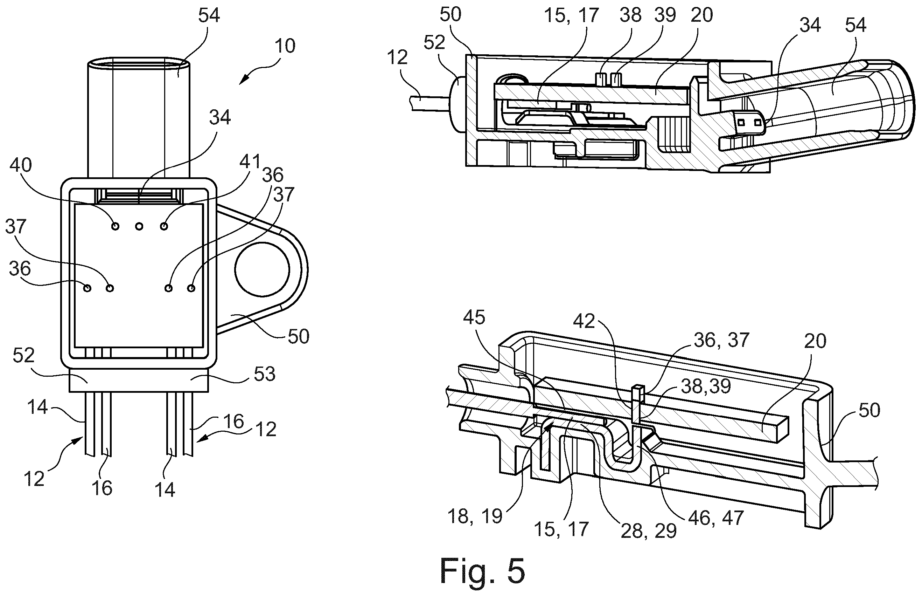

Fig. 5 shows further views of the temperature sensor 10 described in Fig. 3. It can be seen that the printed circuit board 20 is connected to the electrical output contact 34 via further transmission elements 40, 41. The strands 15, 17 of the measuring wires 14, 16 are welded or crimped to the terminals 28, 29. An insulation layer 45 can be provided between the strands 15, 17 and the printed circuit board 20 to electrically separate the printed circuit board 20 from the terminals 28, 29.

The insulation layer 45 could preferably be formed by an air-gap or by a material layer e.g. a part of the housing 50.

Preferably, the connection 18, 19 where the stranded wires 15, 17 are connected to the terminals 28, 29 is provided on the underside of the PCB 20. Preferably the connection 18, 19 is on one side of the PCB 20 and the ASIC 21 is on an opposite side of the PCB 20. Thus, ASIC 21 and connections 18, 19 could be brought together closely, which enhances the accuracy and reliability of the measuring result.

The free end sections 46, 47 of the terminals 28, 29 are each electrically connected to the printed circuit board 20 via a clamp connection 36, 37, e.g. a press fit connection.

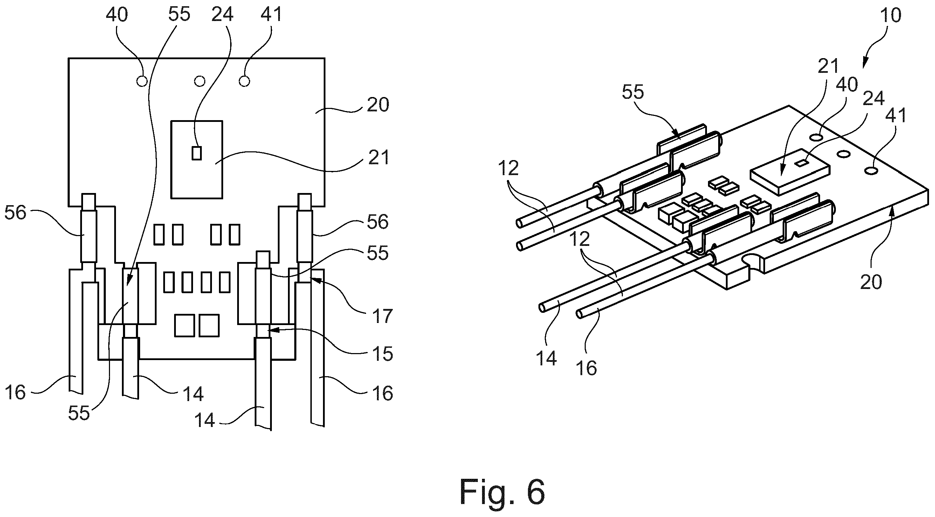

Fig. 6 shows another example of a temperature sensor 10, which comprises a housing 50 with a cavity 51 in which a printed circuit board 20 is located. The temperature sensor 10 further comprises a thermocouple 12, with an integrated circuit 21, in particular an ASIC 21, arranged on the printed circuit board 20. The thermocouple 12 comprises a first measuring wire 14 and a second measuring wire 16, the first measuring wire 14 and the second measuring wire 16 being electrically conductively connected to each other with their respective first ends at a junction 18 as shown in Fig. 1. The measuring wires 14, 16 have electrically conductive stranded wires 15, 17 at their respective second ends.

As shown in Fig. 2 the housing 50 comprises two metallic terminals 28, 29, which are positively connected with the housing 50. The first measuring wire 14 of the thermocouple 12 is connected to a first terminal 28 at a further connection point 30 via a weld seam 32. The weld seam 32 can be produced in particular by means of an ultrasonic welding process or a resistance welding process. The second measuring wire 16 of thermocouple 12 is connected at a connection point 31 to the second terminal 29 by means of a weld seam 32. As an alternative to a weld seam 32, the measuring wires 14, 16 can also be connected to the respective terminals 28, 29 by means of a crimp connection 33. By connecting the strands 15, 17 of the measuring wires 14, 16 to the terminals 28, 29, an effective strain relief is created so that the PCB is not damaged when a tensile force is applied to the measuring wires 14, 16 of the thermocouple 12 and this tensile force is introduced into the housing 50 via the terminals 28, 29.

The transmission of the electrical signal from the respective measuring wire 14, 16 to the printed circuit board 20 is realized as shown in Fig. 6 via crimp connections 55, 56. Therefore crimping elements are directly attached to the printed circuit board 20 to provide an electrical connection between the stranded wires 15, 17 and the printed circuit board 20.

## Claims

1. A temperature sensor (10) comprising
- a housing (50) which surrounds a printed circuit board (20) at least in sections, the printed circuit board (20) carrying an integrated circuit (21), in particular an ASIC,
- a thermocouple (12) comprising a first measuring wire (14) and a second measuring wire (16), wherein
- the first measuring wire (14) and the second measuring wire (16) are connected to each other by their respective first ends at a first connection point (18), wherein
- the measuring wires (14, 16) each comprise an electrically conductive stranded wire (15, 17) at their respective second ends, wherein
- transmission elements (22, 23) are arranged in the housing (50) for transmitting a measuring voltage (Uₘ) or a measuring current (Iₘ) from the stranded wires (15, 17) to the printed circuit board (20), wherein
- the transmission elements (22, 23) are made of a different material than the stranded wires (15, 17) of the measuring wires (14, 16)
- the housing (50) has a cavity (51) in which the integrated circuit (21) and connection points (19) with which the stranded wires (15, 17) are electrically conductively connected to the transmission elements (22, 23) are arranged
**characterized in that**
- two metallic terminals (28, 29) are arranged in the housing (50), a section (43) of the first measuring wire (14) being connected to the first terminal (28) and a section (44) of the second measuring wire (16) being connected to the second terminal (29) in a material-locking or form-locking manner in order to form a strain relief,
- and **in that** the terminals (28, 29) are received positively in the housing (50) at least in sections, wherein the position of the terminals relative to the housing is defined and fixed by means of a form-fit connection, so that the terminals (28, 29) provide strain relief for connection points on the printed circuit board (20).

2. A temperature sensor (10) comprising
- a housing (50) which surrounds a printed circuit board (20) at least in sections, the printed circuit board (20) carrying an integrated circuit (21), in particular an ASIC,
- a thermocouple (12) comprising a first measuring wire (14) and a second measuring wire (16), wherein
- the first measuring wire (14) and the second measuring wire (16) are connected to each other by their respective first ends at a first connection point (18), wherein
- the measuring wires (14, 16) each comprise an electrically conductive stranded wire (15, 17) at their respective second ends, wherein
- transmission elements (22, 23) are arranged in the housing (50) for transmitting a measuring voltage (Uₘ) or a measuring current (Iₘ) from the stranded wires (15, 17) to the printed circuit board (20), wherein
- the transmission elements (22, 23) are made of a different material than the stranded wires (15, 17) of the measuring wires (14, 16)
- the housing (50) has a cavity (51) in which the integrated circuit (21) and connection points (19) with which the stranded wires (15, 17) are electrically conductively connected to the transmission elements (22, 23) are arranged
**characterized in that**
- the transmission elements are designed as first and second metallic terminals (28, 29), a section (43) of the first measuring wire (14) being connected to the first terminal (28) and a section (44) of the second measuring wire (16) being connected to the second terminal (29) in a material-locking or form-locking manner in order to form a strain relief,
- and **in that** the terminals (28, 29) are received positively in the housing (50) at least in sections, wherein the position of the terminals relative to the housing is defined and fixed by means of a form-fit connection, so that the terminals (28, 29) provide strain relief for connection points on the printed circuit board (20).

3. The temperature sensor (10) according to claim 1 or 2, **characterized in that** the transmission elements (22, 23) are designed as SMD connectors (26, 27) arranged on the printed circuit board (20), the SMD connectors (26, 27) connecting the stranded wires (15, 17) of the measuring wires (14, 16) electrically conductively to the printed circuit board (20).

4. The temperature sensor (10) according any of claims 1 to 3, **characterized in that** the terminals (28, 29) or the sections (43, 44) of the measuring wires (14, 16) connected to the terminals (28, 29) are spaced apart from the printed circuit board (20)

5. The temperature sensor (10) according to any of claims 1 to 4, **characterized in that** an insulating layer (45) is arranged or formed between the terminals (28, 29) or the sections (43, 44) of the measuring wires (14, 16) connected to the terminals (28, 29) and the printed circuit board (20), which insulating layer (45) prevents an electrical connection between the terminals (28, 29) and the integrated circuit (21) arranged on the printed circuit board (20).

6. The temperature sensor (10) according to claim 2, **characterized in that** the transmission elements (22, 23) are arranged in the housing (50), a free end section (46, 47) of the terminals (28, 29) within the cavity (51) in each case being electrically conductively connected to the printed circuit board (20).

7. The temperature sensor (10) according to one of the preceding claims 1 to 6, **characterized in that** the stranded wire (15) of the first measuring wire (14) is connected to the first terminal (28) and the stranded wire (17) of the second measuring wire (16) is connected to the second terminal (29) in a material-locking or form-locking manner in order to form a strain relief.

8. The temperature sensor (10) according to claim 6 or 7, **characterized in that** the terminals (28, 29) are received in the printed circuit board (20) by means of a press-fit connection (48).

9. The temperature sensor (10) according to one of the preceding claims 1 to 8, **characterized in that** the stranded wires (15, 17) or the sections (43, 44) of the measuring wires (14, 16) are welded or crimped to the terminals (28, 29).

10. The temperature sensor (10) according to any of the claims 1 to 9, **characterized in that** the terminals (28, 29) are U-shaped or meander-shaped.

12. The temperature sensor (10) according to any of the claims 1 to 11, **characterized in that** the printed circuit board (20) is connected by means of further transmission elements (40, 41) to an electrical output contact (34) for contacting the temperature sensor (10).

13. The temperature sensor (10) according to claim 12, **characterized in that** the further transmission elements (40, 41) are connected to the housing (50) in a material-locking and/or form-locking manner by means of an injection moulding process.

14. The temperature sensor (10) according to any of the preceding claims, **characterized in that** a reference temperature sensor (24) is arranged on the printed circuit board (20).

15. A method for manufacturing a temperature sensor (10) according to any of the claims 1 to 14, **characterized in that** the integrated circuit (21) and the connection points (19), with which the stranded wires (15, 17) are electrically conductively connected to the transmission elements (22, 23), are arranged in a common cavity (51) of the housing (50).

## Patentansprüche

1. Temperatursensor (10) umfassend
- ein Gehäuse (50), das eine Leiterplatte (20) zumindest abschnittsweise umgibt, wobei die Leiterplatte (20) eine integrierte Schaltung (21), insbesondere einen ASIC, trägt
- ein Thermoelement (12), das einen ersten Messdraht (14) und einen zweiten Messdraht (16) umfasst, wobei
- der erste Messdraht (14) und der zweite Messdraht (16) mit ihren jeweiligen ersten Enden an einer ersten Verbindungsstelle (18) miteinander verbunden sind, wobei
- die Messdrähte (14, 16) an ihren zweiten Enden jeweils eine elektrisch leitende Litze (15, 17) umfassen, wobei
- im Gehäuse (50) Übertragungselemente (22, 23) zur Übertragung einer Mess-Spannung (Uₘ) oder eines Mess-Stroms (Iₘ) von den Litzen (15, 17) auf die Leiterplatte (20) angeordnet sind, wobei
- die Übertragungselemente (22, 23) aus einem anderen Material bestehen als die Litzen (15, 17) der Messdrähte (14, 16)
- das Gehäuse (50) einen Hohlraum (51) aufweist, in dem die integrierte Schaltung (21) und Anschlussstellen (19), mit denen die Litzen (15, 17) elektrisch leitend mit den Übertragungselementen (22, 23) verbunden sind, angeordnet sind
**dadurch gekennzeichnet, dass**
- dass im Gehäuse (50) zwei metallische Anschlüsse (28, 29) angeordnet sind, wobei ein Abschnitt (43) des ersten Messdrahtes (14) mit dem ersten Anschluss (28) und ein Abschnitt (44) des zweiten Messdrahtes (16) mit dem zweiten Anschluss (29) zur Bildung einer Zugentlastung stoffschlüssig oder formschlüssig verbunden ist,
- und dass die Anschlüsse (28, 29) zumindest abschnittsweise formschlüssig im Gehäuse (50) aufgenommen sind, wobei die Lage der Anschlüsse relativ zum Gehäuse mittels einer formschlüssigen Verbindung definiert und fixiert ist, so dass die Anschlüsse (28, 29) Zugentlastung für Anschlussstellen auf der Leiterplatte (20) bieten.

2. Temperatursensor (10) umfassend
- ein Gehäuse (50), das eine Leiterplatte (20) zumindest abschnittsweise umgibt, wobei die Leiterplatte (20) eine integrierte Schaltung (21), insbesondere einen ASIC, trägt
- ein Thermoelement (12), das einen ersten Messdraht (14) und einen zweiten Messdraht (16) umfasst, wobei
- der erste Messdraht (14) und der zweite Messdraht (16) mit ihren jeweiligen ersten Enden an einer ersten Verbindungsstelle (18) miteinander verbunden sind, wobei
- die Messdrähte (14, 16) an ihren zweiten Enden jeweils eine elektrisch leitende Litze (15, 17) umfassen, wobei
- im Gehäuse (50) Übertragungselemente (22, 23) zur Übertragung einer Mess-Spannung (Uₘ) oder eines Mess-Stroms (Iₘ) von den Litzen (15, 17) auf die Leiterplatte (20) angeordnet sind, wobei
- die Übertragungselemente (22, 23) aus einem anderen Material bestehen als die Litzen (15, 17) der Messdrähte (14, 16)
- das Gehäuse (50) einen Hohlraum (51) aufweist, in dem die integrierte Schaltung (21) und Anschlussstellen (19), mit denen die Litzen (15, 17) elektrisch leitend mit den Übertragungselementen (22, 23) verbunden sind, angeordnet sind
**dadurch gekennzeichnet, dass**
- die Übertragungselemente als erste und zweite metallische Anschlüsse (28, 29) ausgebildet sind, wobei ein Abschnitt (43) des ersten Messdrahtes (14) mit dem ersten Anschluss (28) und ein Abschnitt (44) des zweiten Messdrahtes (16) mit dem zweiten Anschluss (29) zur Bildung einer Zugentlastung stoffschlüssig oder formschlüssig verbunden ist,
- und dass die Anschlüsse (28, 29) zumindest abschnittsweise formschlüssig im Gehäuse (50) aufgenommen sind, wobei die Lage der Anschlüsse relativ zum Gehäuse mittels einer formschlüssigen Verbindung definiert und fixiert ist, so dass die Anschlüsse (28, 29) Zugentlastung für Anschlussstellen auf der Leiterplatte (20) bieten.

3. Temperatursensor (10) nach Anspruch 1 oder 2, **dadurch gekennzeichnet, dass** die Übertragungselemente (22, 23) als auf der Leiterplatte (20) angeordnete SMD-Verbinder (26, 27) ausgebildet sind, wobei die SMD-Verbinder (26, 27) die Litzen (15, 17) der Messdrähte (14, 16) elektrisch leitend mit der Leiterplatte (20) verbinden.

4. Temperatursensor (10) nach einem der Ansprüche 1 bis 3, **dadurch gekennzeichnet, dass** die Anschlüsse (28, 29) oder die Abschnitte (43, 44) der mit den Anschlüssen (28, 29) verbundenen Messdrähte (14, 16) von der Leiterplatte (20) beabstandet sind.

5. Temperatursensor (10) nach einem der Ansprüche 1 bis 4, **dadurch gekennzeichnet, dass** zwischen den Anschlüssen (28, 29) oder den Abschnitten (43, 44) der mit den Anschlüssen (28, 29) verbundenen Messdrähte (14, 16) und der Leiterplatte (20) eine Isolierschicht (45) angeordnet oder ausgebildet ist, die eine elektrische Verbindung zwischen den Anschlüssen (28, 29) und der auf der Leiterplatte (20) angeordneten integrierten Schaltung (21) verhindert.

6. Temperatursensor (10) nach Anspruch 2, **dadurch gekennzeichnet, dass** die Übertragungselemente (22, 23) im Gehäuse (50) angeordnet sind, wobei jeweils ein freier Endabschnitt (46, 47) der Anschlüsse (28, 29) innerhalb des Hohlraums (51) mit der Leiterplatte (20) elektrisch leitend verbunden ist.

7. Temperatursensor (10) nach einem der vorhergehenden Ansprüche 1 bis 6, **dadurch gekennzeichnet, dass** die Litze (15) des ersten Messdrahtes (14) mit dem ersten Anschluss (28) und die Litze (17) des zweiten Messdrahtes (16) mit dem zweiten Anschluss (29) stoffschlüssig oder formschlüssig verbunden ist, um eine Zugentlastung zu bilden.

8. Temperatursensor (10) nach Anspruch 6 oder 7, **dadurch gekennzeichnet, dass** die Anschlüsse (28, 29) mittels einer Presssitzverbindung (48) in der Leiterplatte (20) aufgenommen sind.

9. Temperatursensor (10) nach einem der vorhergehenden Ansprüche 1 bis 8, **dadurch gekennzeichnet, dass** die Litzen (15, 17) oder die Abschnitte (43, 44) der Messdrähte (14, 16) mit den Anschlüssen (28, 29) verschweißt oder vercrimpt sind.

10. Temperatursensor (10) nach einem der Ansprüche 1 bis 9, **dadurch gekennzeichnet, dass** die Anschlüsse (28, 29) U-förmig oder mäanderförmig sind.

12. Temperatursensor (10) nach einem der Ansprüche 1 bis 11, **dadurch gekennzeichnet, dass** die Leiterplatte (20) über weitere Übertragungselemente (40, 41) mit einem elektrischen Ausgangskontakt (34) zur Kontaktierung des Temperatursensors (10) verbunden ist.

13. Temperatursensor (10) nach Anspruch 12, **dadurch gekennzeichnet, dass** die weiteren Übertragungselemente (40, 41) mittels eines Spritzgussverfahrens stoffschlüssig und/oder formschlüssig mit dem Gehäuse (50) verbunden sind.

14. Temperatursensor (10) nach einem der vorhergehenden Ansprüche, **dadurch gekennzeichnet, dass** auf der Leiterplatte (20) ein Referenztemperatursensor (24) angeordnet ist.

15. Verfahren zur Herstellung eines Temperatursensors (10) nach einem der Ansprüche 1 bis 14, **dadurch gekennzeichnet, dass** die integrierte Schaltung (21) und die Anschlussstellen (19), mit denen die Litzen (15, 17) elektrisch leitend mit den Übertragungselementen (22, 23) verbunden sind, in einem gemeinsamen Hohlraum (51) des Gehäuses (50) angeordnet werden.

## Revendications

1. Capteur de température (10) comprenant
- un boîtier (50) qui entoure une carte de circuit imprimé (20) au moins en sections, la carte de circuit imprimé (20) portant un circuit intégré (21), en particulier un ASIC,
- un thermocouple (12) comprenant un premier fil de mesure (14) et un second fil de mesure (16), dans lequel
- le premier fil de mesure (14) et le second fil de mesure (16) sont reliés l'un à l'autre par leurs premières extrémités respectives en un premier point de connexion (18), dans lequel
- les fils de mesure (14, 16) comprennent chacun un fil toronné électriquement conducteur (15, 17) à leurs secondes extrémités respectives, dans lequel
- des éléments de transmission (22, 23) sont disposés dans le boîtier (50) pour transmettre une tension de mesure (Uₘ) ou un courant de mesure (Iₘ) des fils toronnés (15, 17) à la carte de circuit imprimé (20), dans lequel
- les éléments de transmission (22, 23) sont constitués d'un matériau différent de celui des fils toronnés (15, 17) des fils de mesure (14, 16),
- le boîtier (50) comporte une cavité (51) dans laquelle sont disposés le circuit intégré (21) et les points de connexion (19) avec lesquels les fils toronnés (15, 17) sont électriquement connectés par conduction aux éléments de transmission (22, 23),
**caractérisé en ce que**
- deux bornes métalliques (28, 29) sont disposées dans le boîtier (50), une section (43) du premier fil de mesure (14) étant connectée à la première borne (28) et une section (44) du second fil de mesure (16) étant connectée à la seconde borne (29) par verrouillage de matériau ou de forme afin de former une décharge de traction,
- et **en ce que** les bornes (28, 29) sont reçues positivement dans le boîtier (50) au moins en sections, la position des bornes par rapport au boîtier étant définie et fixée au moyen d'une connexion de forme, de sorte que les bornes (28, 29) constituent une décharge de traction pour les points de connexion sur la carte de circuit imprimé (20).

2. Capteur de température (10) comprenant
- un boîtier (50) qui entoure une carte de circuit imprimé (20) au moins en sections, la carte de circuit imprimé (20) portant un circuit intégré (21), en particulier un ASIC,
- un thermocouple (12) comprenant un premier fil de mesure (14) et un second fil de mesure (16), dans lequel
- le premier fil de mesure (14) et le second fil de mesure (16) sont reliés l'un à l'autre par leurs premières extrémités respectives en un premier point de connexion (18), dans lequel
- les fils de mesure (14, 16) comprennent chacun un fil toronné électriquement conducteur (15, 17) à leurs secondes extrémités respectives, dans lequel
- des éléments de transmission (22, 23) sont disposés dans le boîtier (50) pour transmettre une tension de mesure (Uₘ) ou un courant de mesure (Iₘ) des fils toronnés (15, 17) à la carte de circuit imprimé (20), dans lequel
- les éléments de transmission (22, 23) sont constitués d'un matériau différent de celui des fils toronnés (15, 17) des fils de mesure (14, 16),
- le boîtier (50) comporte une cavité (51) dans laquelle sont disposés le circuit intégré (21) et les points de connexion (19) avec lesquels les fils toronnés (15, 17) sont électriquement connectés par conduction aux éléments de transmission (22, 23),
**caractérisé en ce que**
- les éléments de transmission sont conçus sous forme de première et deuxième bornes métalliques (28, 29), une section (43) du premier fil de mesure (14) étant connectée à la première borne (28) et une section (44) du deuxième fil de mesure (16) étant connectée à la deuxième borne (29) par verrouillage de matériau ou de forme afin de former une décharge de traction,
- et **en ce que** les bornes (28, 29) sont reçues positivement dans le boîtier (50) au moins par sections, la position des bornes par rapport au boîtier étant définie et fixée au moyen d'une connexion par forme, de sorte que les bornes (28, 29) constituent une décharge de traction pour les points de connexion sur la carte de circuit imprimé (20).

3. Capteur de température (10) selon la revendication 1 ou 2, **caractérisé en ce que** les éléments de transmission (22, 23) sont conçus comme des connecteurs SMD (26, 27) disposés sur la carte de circuit imprimé (20), les connecteurs SMD (26, 27) reliant les fils toronnés (15, 17) des fils de mesure (14, 16) de manière électriquement conductrice à la carte de circuit imprimé (20).

4. Capteur de température (10) selon l'une quelconque des revendications 1 à 3, **caractérisé en ce que** les bornes (28, 29) ou les sections (43, 44) des fils de mesure (14, 16) connectés aux bornes (28, 29) sont espacées de la carte de circuit imprimé (20)

5. Capteur de température (10) selon l'une quelconque des revendications 1 à 4, **caractérisé en ce qu'**une couche isolante (45) est disposée ou formée entre les bornes (28, 29) ou les sections (43, 44) des fils de mesure (14, 16) connectés aux bornes (28, 29) et la carte de circuit imprimé (20), laquelle couche isolante (45) empêche une connexion électrique entre les bornes (28, 29) et le circuit intégré (21) disposé sur la carte de circuit imprimé (20).

6. Capteur de température (10) selon la revendication 2, **caractérisé en ce que** les éléments de transmission (22, 23) sont disposés dans le boîtier (50), une section d'extrémité libre (46, 47) des bornes (28, 29) à l'intérieur de la cavité (51) étant dans chaque cas connectée électriquement par conduction à la carte de circuit imprimé (20).

7. Capteur de température (10) selon l'une des revendications précédentes 1 à 6, **caractérisé en ce que** le fil toronné (15) du premier fil de mesure (14) est connecté à la première borne (28) et le fil toronné (17) du deuxième fil de mesure (16) est connecté à la deuxième borne (29) par verrouillage de matériau ou de forme afin de former une décharge de traction.

8. Capteur de température (10) selon la revendication 6 ou 7, **caractérisé en ce que** les bornes (28, 29) sont reçues dans la carte de circuit imprimé (20) au moyen d'une connexion par pression (48).

9. Capteur de température (10) selon l'une des revendications précédentes 1 à 8, **caractérisé en ce que** les fils toronnés (15, 17) ou les sections (43, 44) des fils de mesure (14, 16) sont soudés ou sertis aux bornes (28, 29).

10. Capteur de température (10) selon l'une quelconque des revendications 1 à 9, **caractérisé en ce que** les bornes (28, 29) sont en forme de U ou de méandre.

12. Capteur de température (10) selon l'une des revendications 1 à 11, **caractérisé en ce que** la carte de circuit imprimé (20) est connectée au moyen d'autres éléments de transmission (40, 41) à un contact de sortie électrique (34) destiné à entrer en contact avec le capteur de température (10).

13. Capteur de température (10) selon la revendication 12, **caractérisé en ce que** les autres éléments de transmission (40, 41) sont connectés au boîtier (50) par verrouillage de matériau et/ou de forme au moyen d'un procédé de moulage par injection.

14. Capteur de température (10) selon l'une quelconque des revendications précédentes, **caractérisé en ce qu'**un capteur de température de référence (24) est disposé sur la carte de circuit imprimé (20).

15. Procédé de fabrication d'un capteur de température (10) selon l'une quelconque des revendications 1 à 14, **caractérisé en ce que** le circuit intégré (21) et les points de connexion (19), avec lesquels les fils toronnés (15, 17) sont connectés électriquement par conduction aux éléments de transmission (22, 23), sont disposés dans une cavité commune (51) du boîtier (50).
